# EUROPEAN PATENT SPECIFICATION

(11) **EP 2 298 082 B1**
(45) Date of publication and mention of the grant of the patent: **31.07.2019**
(21) Application number: 09762478.7
(22) Date of filing: 09.06.2009
(51) Int. Cl.: A23K 50/00, A23K 10/40, A23K 20/20

(54) **COMPOSITION FOR FEED, AND FEED COMPRISING THE SAME**
ZUSAMMENSETZUNG FÜR FUTTERMITTEL UND FUTTERMITTEL, DAS DIESE ENTHÄLT
COMPOSITION POUR ALIMENT ET ALIMENT EN CONTENANT

(30) Priority: 09.06.2008 JP 2008150966
(43) Date of publication of application: 23.03.2011
(73) Proprietor: Idemitsu Kosan Co., Ltd., Chiyoda-ku Tokyo 100-8321 (JP)
(72) Inventor: NAGASHIMA, Kyo, Sodegaura-shi Chiba 299-0293 (JP); MOCHIZUKI, Masami, Sodegaura-shi Chiba 299-0293 (JP)
(74) Representative: Vossius & Partner Patentanwälte Rechtsanwälte mbB
(86) International application number: PCT/JP2009/060519
(87) International publication number: WO 2009/151048

(56) References cited:
- WO-A1-2006/137289
- JP-A- 8 231 410
- JP-A- 2001 151 675
- JP-A- 2007 209 224
- US-A- 5 725 894
- DATABASE WPI Week 200381 Thomson Scientific, London, GB; AN 2003-868921 XP002636616, & JP 2003 238400 A (NIPPON ZENYAKU KOGYO KK) 27 August 2003 (2003-08-27)

## Description

### Technical Field

The present invention relates to a composition for a feed and a feed each containing cashew nut shell liquid (CNSL) and/or anacardic acids and an oil sorbent.

The present invention also relates to a composition for a feed and a feed each containing a pulverized product of cashew nut shells and an oil sorbent. The composition can be used in breeding ruminants and the like.

### Background Art

In ruminants such as bovines and sheep, a feed is digested and fermented by microorganisms in their rumens, and the ruminants live by utilizing the fermented products. Therefore, it is a loss of energy efficiency in a feed when methane is generated from the rumens. Further, methane is a greenhouse gas that influences the global warming, and hence it is important to reduce the amount of methane produced in the rumens of the ruminants.

A methanogen in a rumen reduces carbon dioxide by utilizing hydrogen to thereby produce methane. The contribution ratio of methane to the global warming is second highest after carbon dioxide, and it is considered that methane emitted from ruminants accounts for 15 to 20% of the total emission of methane.

In 1940s, it was found out that the growth of livestock is promoted by adding a small amount of an antibiotic to livestock feed. Since then, the practice of adding the antibiotic to the livestock feed has been performed widely as means for promoting the growth of the livestock to increase a feed efficiency.

It is considered that the antibiotic exhibits an action of promoting the growth by its effects of (1) prevention of pathogenic infection in livestock, (2) improvement in metabolism, and (3) suppression of proliferation of harmful intestinal bacteria, but the details thereof are still unclear. On the other hand, antibiotics are distributed widely in the environment as a result of adding antibiotics to a feed, and accordingly, an appearance of antibiotic-resistant bacteria has become a social problem. In recent years, the addition of an antibiotic to a feed has been regulated strictly, and in Europe, the use of the antibiotic for promoting the growth has been banned since January 2006. Further, there is a strong producer demand for products from livestock that are raised without using an antibiotic, and hence, a need for an alternative to the antibiotic is growing.

Ionophores such as monensin, which are antibiotics, are widely used in a feed for a ruminant. Monensin exhibits a selective suppressing effect on a rumen microorganism and has, as a result, functions of reducing methane production and promoting propionic acid production. Propionic acid has higher ATP production efficiency compared with other volatile fatty acids, and hence, feed efficiency is improved owing to the promotion of propionic acid production.

There is also desired the development of alternatives to monensin and the like to be added to a feed for a ruminant. As the alternatives, there are studied an oil extracted from a plant (Non-patent Document 1), a vaccine against lactic acid-producing bacteria (Non-patent Document 2), a chicken egg antibody against lactic acid-producing bacteria (Non-patent Document 3), and the like. However, those technologies are not in practical use yet because there are problems in that their effects are not stable, the registration thereof as feeds is not permitted, and the like. Further, there is also studied gluconic acid (Patent Document 1), but the amount of propionic acid production is not exemplified, so a methane production-suppressing effect is not known.

Infectious diseases of livestock cause a weight decrease of the livestock and induce various pathologies, and hence remarkably lowers the commercial value of the livestock. For example, *Staphylococcus aureus* is a bacterium causing mastitis , subcutaneous tumor, and pyemia of bovines, sheep, and goats, anthema of horses, and arthritis, dermatitis, and ichorrhemia of pigs and chickens. Further, *Streptococcus suis* is a bacterium causing meningitis, ichorrhemia, endocarditis, and arthritis of pigs, and *Streptococcus bovis* is a bacterium causing a bloat in bovines.

The bloat refers to the following state: rumen juice is formed into a foamed state so that gas is not separated from liquid, and the accumulated gas cannot be expelled by eructation. The gas compresses the heart and the lungs, and the animal dies when left as it is. When the animal is fed with a feed containing a small amount of coarse feed and a large amount of starch such as corn, the number of *Streptococcus bovis* increases in the rumen, and the rumen juice is formed into a foamed state due to the generated viscous substance.

It is known that cashew nut shell liquid has an antibacterial action (Non-patent Document 4) and a coccidiosis-relieving action (Patent Document 2) . Further, as for the rumen function-improving effect on a ruminant, an in vitro test result using anacardic acid (Non-patent Document 6) is reported, but there is no disclosure on the reproducibility, application, and optimum content on an actual animal.

Further, it is reported that the cashew nut shell liquid has an antibacterial action against Gram-positive bacteria such as *Staphylococcus aureus, Streptococcus mutans, Bacillus subtilis,* and *Bacillus ammoniagenes,* and does not have an antibacterial action against Gram-negative bacteria such as *Escherichia coli, Enterobacter aerogenes,* and *Pseudomonas aeruginosa,* and against fungi such as *Saccharomyces cerevisiae, Candida utilis,* and *Penicillium chrysogenum* (Non-patent Document 5). However, the antibacterial action of the cashew nut shell liquid against *S. bovis* is not known, and there is no report at all on the preventive effect against a bloat.
Patent document 3 relates to a feed for an animal which contains cashew nut oil and/or anacardic acid and at least one substance selected from an organic zinc compound, a betaine and a microorganism of the genus Bacillus.

Patent document 4 relates to a method for producing an adsorption oil and fat for feed comprising making a carrier composed of amorphous silicon dioxide adsorb functional oil and fat and an antioxidant under pressure.

Patent document 5 discloses a specific coccidiosis-relieving agent comprising cashew nut shell oil and/or anacardic acids as an active ingredient and a feed for relieving coccidiosis characterized by containing cashew nut shell oil and/or anacardic acids.

Patent document 6 relates to an anticoccidial composition containing a fermented and cultured product of Aspergillus oryzae, a cashew nut oil and/or anacardic acids.

The cashew nut shell liquid is in a liquid or solid form at room temperature, and hence cashew nut shell liquid must be formulated because it is difficult to blend the cashew nut shell liquid uniformly in a feed. In addition, the pulverized product of cashew nut shells is a jelly-like substance and must be formulated to be blended uniformly in a feed.

### Prior Art Documents

### Patent Document

Patent Document 1: WO 01/028551
Patent Document 2: JP 08-231410 A
Patent document 3: JP 2001-151675 A
Patent document 4: JP 2007-209224 A
Patent document 5: US 5,725,894
Patent document 6: JP 2003-238400 A

### Non Patent Document

Non Patent Document 1: Benchaar et al., Can. J. Anim. Sci. 86, 91-96 (2006)
Non Patent Document 2: Shu et al., FEMS Immunology & Medical Microbiology, 26(2), 153-158 (1999)
Non Patent Document 3: DiLorenzo et al., J. Anim. Sci., 84,2178-2185 (2006)
Non Patent Document 4: Muroi, H. et al. Bioorganic & Medicinal Chemistry 12, 583-587 (2004)
Non Patent Document 5: Himejima M. and Kubo I. , J. Agric. Food Chem., 39, 418-421 (1991)
Non Patent Document 6: Van Nevel C. J., et al, Applied Microbiology 21, 365-366 (1971)

### Summary of the Invention

An object of the present invention is to formulate cashew nut shell liquid (CNSL) and/or anacardic acids or pulverized product of cashew nut shells into a particulate form which is easy to handle, the cashew nut shell liquid and/or anacardic acids or pulverized cashew nut shell being capable of improving the rumen fermentation in ruminants, contributing to suppressing the generation of greenhouse gas, and controlling a bloat being a problem in ruminants . Another object of the present invention is to prevent irritations caused by the cashew nut shell liquid.

The inventors of the present invention have conducted intensive studies in order to solve the above-mentioned problem. As a result, the inventors have found that a composition for a feed including cashew nut shell liquid and/or anacardic acids and an oil sorbent, in which the cashew nut shell liquid and/or anacardic acids are contained at a content of 25 mass% to 65 mass% relative to the total amount of the composition for a feed, can be formulated into a particulate form which is easy to handle.

The inventors of the present invention have also found that a composition for a feed including a pulverized product of cashew nut shells and an oil sorbent, in which the pulverized product of cashew nut shells is contained at a content of 10 mass% to 90 mass% relative to the total amount of the composition for a feed, can be formulated into a particulate form which is easy to handle.

The inventors of the present invention have found that a composition for a feed including cashew nut shell liquid and/or anacardic acids, an oil sorbent, and a hardened oil, in which the cashew nut shell liquid and/or anacardic acids are contained at a content of 25 mass% to 65 mass% relative to the total amount of the composition for a feed, can be formulated into a particulate form which is easy to handle.

The inventors of the present invention have also found that a composition for a feed including a pulverized product of cashew nut shells, an oil sorbent, and a hardened oil, in which the pulverized product of cashew nut shells is contained at a content of 10 mass% to 90 mass% relative to the total amount of the composition for a feed, can be formulated into a particulate form which is easy to handle.

Thus, the inventors of the present invention have completed the present invention.

That is, the present invention is as follows:
1. A particulate composition for a feed, comprising cashew nut shell liquid and/or anacardic acids and an oil sorbent, wherein the cashew nut shell liquid and/or anacardic acids is/are contained at a content of 25 mass% to 65 mass% relative to a total amount of the composition for a feed.
2. A particulate composition for a feed, comprising a pulverized product of cashew nut shells and an oil sorbent, wherein the pulverized product of cashew nut shells are contained at a content of 10 mass% to 90 mass% relative to a total amount of the composition for a feed.
3. The particulate composition for a feed according to item 1 or 2, wherein the oil sorbent is at least one kind selected from a group consisting of magnesium oxide, stearate, talc, diatomite and silica.
4. The particulate composition for a feed according to item 3, wherein the oil sorbent is an oil sorbent which adsorbs 50 to 300 g of oil per 100 g of the oil sorbent.
5. The particulate composition for a feed according to item 4, wherein the oil sorbent is comprised of particles with a particle size of 2 to 200 µm.
6. The particulate composition for a feed according to any one of items 1 to 5, further comprising a hardened oil.
7. The particulate composition for a feed according to any one of items 1 to 6, wherein the mass ratio of the oil sorbent and cashew nut shell liquid is 100:20 to 100:180.
8. A feed comprising the composition for a feed according to any one of items 1 to 7.
9. The feed according to item 8, wherein the cashew nut shell liquid is contained at a content of 0.02 to 4.0 mass% relative to a total amount of a feed.
10. The feed according to item 8 or 9, which is suitable for a ruminant.
11. Use of the feed according to any one of items 8 to 10 for improving rumen fermentation and suppressing the generation of green house gas, wherein methods for treatment of the human or animal body by therapy are excluded.
12. Use of a composition according to any one of items 1 to 7 for improving rumen fermentation and suppressing the generation of green house gas, wherein methods for treatment of the human or animal body by therapy are excluded.
13. The feed according to any one of items 8 to 10 for use in controlling bloat.
14. A composition according to any one of items 1 to 7 for use in controlling bloat.
15. Use of cashew nut shell liquid and/or anacardic acids for the manufacture of a feed according to any one of items 8 to 10 for controlling bloat.
16. Use of cashew nut shell liquid and/or anacardic acids for the manufacture of a composition according to any one of items 1 to 7 for controlling bloat.

When the cashew nut shell liquid and/or anacardic acids or pulverized product of cashew nut shells is/are mixed with the oil sorbent to formulate the mixture into powder which is easy to handle and causes no hand irritation while at work, or if necessary, to formulate the mixture into granules such as pellets, a preparation which is easy to blend in a feed and is safe for a user can be obtained as a composition for a feed.

### Brief Description of the Drawings

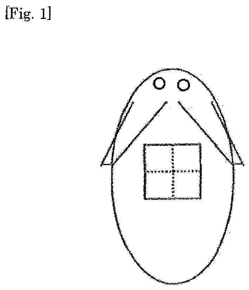

FIG. 1 illustrates the back of a rabbit in which hair pretreatments including hair shearing and hair removing were performed to provide four application sites.

### Best Mode for carrying out the Invention

A composition for a feed of the present invention includes cashew nut shell liquid and/or anacardic acids and an oil sorbent, in which the cashew nut shell liquid and/or anacardic acids are contained at a content of 25 mass% to 65 mass% relative to the total amount of the composition for a feed.

The composition for a feed of the present invention also includes a pulverized product of cashew nut shells and an oil sorbent, in which the pulverized product of cashew nut shells is contained at a content of 10 mass% to 90 mass% relative to the total amount of the composition for a feed.

The cashew nut shell liquid to be used in the present invention is an oily liquid contained in the shell of the seed of a cashew nut tree (*Anacardium occidentale L*.). The cashew nut shell liquid contains, as the components thereof, anacardic acid, cardanol, and cardol.

The cashew nut shell liquid used in the present invention can be obtained as a vegetable oil extracted by compressing the shell of a cashew nut. The cashew nut shell liquid may be heated cashew nut shell liquid obtained by heating non-heated cashew nut shell liquid obtained as described above to 70° C or more, or preferably 130° C or more.

Further, the cashew nut shell liquid to be used in the present invention may be obtained by heating or extraction, for example, dry distillation or solvent extraction of the shell of a cashew nut. In addition, the cashew nut shell liquid to be used in the present invention may be obtained by the method described in JP 08-231410 A. To be specific, the cashew nut shell liquid may be obtained by adding the shell of a cashew nut to heated cashew nut shell liquid heated to 200 to 240° C and extracting the heated cashew nut shell liquid. Moreover, the heated cashew nut shell liquid may be a commercially available product which has already been heated.

The cashew nut shell liquid to be used in the present invention may also be cashew nut shell liquid obtained by pulverizing and crushing the shell of a cashew nut.

The cashew nut shell liquid to be used in the present invention may be a commercially available product.

The content of the cashew nut shell liquid in the composition for a feed of the present invention is 25 mass% to 65 mass% relative to the total amount of the composition for a feed. When the content is 25 mass% or more, a rumen fermentation-improving effect can be efficiently exerted. The content is 65 mass% or less, because the handling property of the improving agent can be maintained by eliminating hand irritation while at work.

Further, in the case of using the powder formulation including the pulverized product of cashew nut shells and oil sorbent, the content of the pulverized product of cashew nut shells in the composition for a feed of the present invention is 10 mass% to 90 mass%. When the content is 10 mass% or more, a rumen fermentation-improving effect can be efficiently exerted.

When the content is 90 mass% or less, the handling property of the improving agent can be maintained by eliminating hand irritations while at work.

The content of the cashew nut shell liquid and/or anacardic acids in the feed of the present invention is preferably 0.02 mass% to 4.0 mass%, more preferably 0.04 mass% to 2.0 mass%, and still more preferably 0.06 mass% to 1.0 mass%. It is preferred that the content be 0.02 mass% or more for the feed to be able to exhibit the rumen fermentation-improving effect, and that the content be 4.0 mass% or less for the feed to be able to maintain its handling property.

For the cashew nut shell liquid used in the present invention, this may be used after being pulverized and crushed, and the cashew nut shell liquid may be contained so that the content of the cashew nut shell liquid in the composition for a feed or in the feed is within the above-mentioned range in terms of the cashew nut shell liquid (CNSL) (30% of CNSL is contained in the cashew nut shell).

As the anacardic acids used in the present invention, there are exemplified natural anacardic acid, synthetic anacardic acid, and derivatives thereof. Further, commercially-available anacardic acid may be used. As described in JP 08-231410 A, anacardic acids may be obtained by eluting cashew nut shell liquid, which has been obtained by subjecting cashew nut shells to extraction treatment with an organic solvent, through chromatography on a silica gel column using a solvent of n-hexane, ethyl acetate, and acetic acid mixed at varied ratios (JP 03-240721 A, JP 03-240716 A, and the like), for example. Those anacardic acids may be contained in the composition for a feed or in the feed in the same content as that of the cashew nut shell liquid.

As the oil sorbent contained in the composition for a feed of the present invention, there are exemplified magnesium oxide, stearate, talc, zeolite, diatomite, and silica, and granular products of them are preferred. The oil sorbent of the present invention preferably adsorbs 50 to 300 g of oil per 100 g of the sorbent. In addition, the particle size of the sorbent is preferably 2 to 200 µm because the particles become coarse to cause separation when the particle size exceeds 200 µm.

In the composition for a feed of the present invention, the mass ratio of the oil sorbent and cashew nut shell liquid is preferably 100:20 to 100:180. Meanwhile, the mass ratio of the oil sorbent and pulverized product of cashew nut shells is preferably 15:100 to 60:100.

As for the dosage form of the composition for a feed of the present invention, the composition can be formulated into powder by containing the oil sorbent such as silica. That is, the composition for a feed of the present invention can be produced by mixing the cashew nut shell liquid, oil sorbent, and if necessary, an arbitrary component, and formulating the mixture into powder. Such powdery composition for a feed of the present invention can be used as a composition for a feed or a feed without being mixed with another arbitrary component.

The composition for a feed of the present invention can be formed into granules such as pellets other than powder. In this case, a hardened oil is added to CNSL in addition to the oil sorbent. As the hardened oil, oil obtained by hardening palm oil, soybean oil, or rapeseed oil can be used. The melting point of the hardened oil is preferably 45 to 65° C. Note that, a usual extrusion granulator may be used for pelletization.

In the composition for a feed of the present invention, the mass ratio of the oil sorbent, cashew nut shell liquid, and hardened oil is preferably 80 to 120:60 to 100:80 to 120, and the mass ratio of the oil sorbent, pulverized product of cashew nut shells, and hardened oil is preferably 15 to 45:60 to 100:80 to 120.

In this description, as for the dosage form of the composition for a feed, the terms "powdery," "granular (pellet form)," or "particulate" each means a dry state in which the composition is not solidified even if the composition is grasped tightly with hand. In this state, almost all of the CNSL is adsorbed to the inside of the oil sorbent such as silica and is not exposed to the surface of a carrier.

In addition, the cashew nut shell liquid has an ability to control a bloat, and hence the composition for a feed of the present invention can be used for controlling the bloat. In particular, as the composition for a feed of the present invention exhibits an antibacterial action against *Streptococcus bovis*, the composition for a feed of the present invention can be used to control a bloat caused by *Streptococcus bovis*. Note that, in the present invention, the term "controlling" includes prevention and treatment.

Further, in addition to the cashew nut shell liquid and/or anacardic acids and oil absorption agent, the composition for a feed of the present invention may further contain an arbitrary component such as a component which is effective for the growth promotion of a ruminant, a nutritional supplement component, or a component for enhancing the preservation stability. Examples of the arbitrary components include: probiotics such as *Enterococcus* bacteria, *Bacillus* bacteria, and *Bifidus* bacteria; enzymes such as amylase and lipase; vitamins such as L-ascorbic acid, choline chloride, inositol, and folic acid; minerals such as potassium chloride, iron citrate, magnesium oxide, and phosphates; amino acids such as DL-alanine, DL-methionine, L-lysine; organic acids such as fumaric acid, butyric acid, lactic acid, acetic acid, and their salts; antioxidants such as ethoxyquin, dibutylhydroxytoluene, butylhydroxyanisole, ferulic acid, vitamin C, and vitamin E; fungicides such as calcium propionate; binders such as CMC, sodium caseinate, and sodium polyacrylate; emulsifiers such as lecithin, glycerin fatty acid ester, and sorbitan fatty acid ester; pigments such as astaxanthin and canthaxanthin; and flavoring agents such as various esters, ethers, and ketones.

The composition for a feed of the present invention can be suitably used as a rumen fermentation-improving agent for a ruminant and as a bloat-controlling agent. Here, the term "controlling" refers to prevention and/or treatment. Further, the composition for a feed of the present invention may be formed into a feed by mixing the composition with another feed component used in general feeds. The kind of the feed and the components other than the cashew nut shell liquid are not particularly limited. The feed is preferably for ruminants.

Note that the content of the cashew nut shell liquid and/or anacardic acids in the feed of the present invention is, from the viewpoints of effects and costs, 0.5 to 50,000 mass ppm, preferably 5 to 10,000 mass ppm, and more preferably 50 to 5,000 mass ppm with respect to a dry mass of the feed.

Further, the feed of the present invention can be produced by adding the composition for a feed as it is to a feed component and mixing the resultant. At this time, when a powdery or solid composition for a feed is used, the form of the composition for a feed may be modified into a liquid form or a gel form for the purpose of facilitating the mixing process. In this case, the following may be used as a liquid carrier: water; a vegetable oil such as soybean oil, rapeseed oil, or corn oil; a liquid animal oil; or a water-soluble polymer compound such as polyvinyl alcohol, polyvinylpyrrolidone, or polyacrylic acid. Further, in order to keep the uniformity of the cashew nut shell liquid in the feed, the feed preferably contains alginic acid, sodium alginate, a xanthan gum, sodium caseinate, an arabic rubber, a guar gum, or awater-soluble polysaccharide such as tamarind seed polysaccharide.

The feed of the present invention is suitable for breeding ruminants such as cattle, goats, and sheep. The amount of feed ingested by an animal may be appropriately adjusted depending on the species, body weight, age, sex, and health condition of the animal, and feed components, etc. In this case, the amount of cashew nut shell liquid and/or anacardic acids contained in the feed is preferably 0.005 to 500 g per animal per day, more preferably 0.05 to 100 g per animal per day, and still more preferably 0.5 to 50 g per animal per day.

Any method usually used may be adopted as a method of feeding animals and a method of raising animals depending on the species of animals.

### Examples

### Example 1. Powdery composition for feed comprising CNSL and oil sorbent

### (1) Test production of preparation

Cashew nut shells were obtained from Cashew Trading Co. , Ltd. , and cashew nut shell liquid (CNSL) were extracted by compressing the cashew nut shells and used in the following tests.

The composition of CNSL was measured by the following method. That is, HPLC (Waters 600, Nihon Waters K.K.), a detector (Waters 490E, Nihon Waters K.K.), a printer (Chromatopak C-R6A, Shimadzu Corporation), and a column (SUPELCOSIL LC18, SUPELCO, Inc.) were used. A solvent including acetonitrile:water:acetic acid of 80:20:1 (volume ratio) was used, and the flow rate was adjusted to 2 ml/min. Detection was performed at an absorbance of 280 nm.

The cashew nut shell liquid was found to contain 61.8 mass% anacardic acid, 8.2 mass% cardanol, and 19.9 mass% cardol.

CNSL is in a liquid or solid form at room temperature. When CNSL is adhered to the skin of a human, the CNSL is difficult to be removed and causes irritation. Therefore, in order to produce a preparation containing CNSL that was adsorbed to the inside of a carrier and was not exposed to the surface of the carrier, CNSL and silica with an average particle size of 100 µm (trade name Sipernat 22, a commercial product manufactured by degussa) were mixed to produce a powdery composition for a feed.

Table 1 shows the results.

### [Table 1]

**Table 1**

| | Silica (g) | CNSL (g) | Property of powder |
|---|---|---|---|
| Referential Example 1-1 | 100 | 0 | Dry powder, the product is still powdery even when it is grasped tightly. |
| Experimental Example 1-1 | 100 | 100 | Dry powder, the product is still powdery even when it is grasped tightly. |
| Experimental Example 1-2 | 100 | 140 | Dry powder, the product is still powdery even when it is grasped tightly. |
| Experimental Example 1-3 | 100 | 180 | Dry powder, the product is still powdery even when it is grasped tightly. |
| Comparative Example 1-1 | 100 | 200 | Wet powder, the product aggregates when the product is grasped tightly, but the aggregate is easy to disintegrate. |

Table 1 shows that, when CNSL is added in an amount up to 180 g to 100 g of silica, the resultant product does not aggregate even if the product is grasped tightly. Therefore, it is considered that almost all of the CNSL was adsorbed to the inside of silica and was not exposed to the surface of the carrier.

### (2) Skin-irritating property

Forty 12-week-old female rabbits (Jla: JW) were acclimatized and fed, and animals which were evaluated to be normal and healthy were used in the following test.

The rabbits were fed individually in a breeding room adjusted to the room temperature of 22±4°C, humidity of 55±15%, and light and dark for 12 hours each (lighting time: 8 a.m. to 8 p.m.) using metal bracket cages, and the rabbits were allowed to freely ingest a feed CR-3 (manufactured by CLEA Japan, Inc.) and to drink water.

As shown in FIG. 1, the back of each rabbit was subjected to hair pretreatments including hair shearing and hair removing to provide four application sites. The horny layers in two sites of the application sites were peeled off to be abrasion sites. The test preparations of Table 1 were moisturized with official purified water and applied uniformly to lints (1×1 inch) so that the weight of a mixture of silica and CNSL be 0.5 g, and the lints were attached to each of a non-abrasion site and an abrasion site (two sites in total) in the back. To each of the other sites (two sites in total), 0.5 ml of official purified water was attached as a control in the same way as described above. The attachment time was 4 hours.

Four hours later, the lints were removed, and the test substances remaining on the patch sites were debrided with official purified water, and 1, 24, 48, and 72 hours later after the removal, the skin conditions were observed. In the case where disorders remained after 72 hours later, observation was continued up to the seventh day every 24 hours.

Judgment: skin reactions were evaluated based on the following criteria.

**Formation of erythema and crust**

| | |
|---|---|
| No erythema | 0 |
| Extremely slight erythema . (barely detectable) | 1 |
| Obvious erythema | 2 |
| Moderate or severe erythema | 3 |
| From severe erythema (Beet redness) to formation of slight crust (deep damage) | 4 |

**Formation of edema**

| | |
|---|---|
| No edema | 0 |
| Extremely slight edema | 1 |
| Slight edema (clear verge formed by obvious protrusion can be detected) | 2 |
| Moderate edema (protrusion of about 1 mm) | 3 |
| Severe edema (protrusion of 1 mm and expansion beyond the exposure range) | 4 |
| Highest score | 4 |

Note that, the primary irritation index is calculated by dividing the sum of the scores of the non-abrasion and abrasion sites 24 and 72 hours later after the removal of the test substances by 4. In the case where the skin primary irritation index is 0, the sample is evaluated as "no irritation," in the case where the index is larger than 0 and less than 2, the sample is evaluated as "slight," in the case where the index is equal to or more than 2 and less than 5, the sample is evaluated as "moderate," and in the case where the index is equal to or more than 5, the sample is evaluated as "strong". In this test, six rabbits were used for each group, and Table 2 shows the results.

### [Table 2]

**Table 2**

| | Silica (g) | CNSL (g) | Primary irritation index (24 hours later) | Primary irritation index (72 hours later) |
|---|---|---|---|---|
| Referential Example 1-1 | 100 | 0 | No irritation | No irritation |
| Experimental Example 1-1 | 100 | 100 | No irritation | No irritation |
| Experimental Example 1-2 | 100 | 140 | No irritation | No irritation |
| Experimental Example 1-3 | 100 | 180 | No irritation | No irritation |
| Comparative Example 1-1 | 100 | 200 | Slight | Moderate |
| Comparative Example 1-2 | - | 200 | Strong | Strong |

Table 2 shows that the test preparations of Comparative Examples 1-1 and 1-2 exhibited slight to strong irritating properties , while the test preparations of Referential Example 1-1 and Experimental Examples 1-1 to 1-3 exhibited no irritating properties . The preparations in a dry powder state exhibited suppressed irritating properties because CNSL was adsorbed to the inside of silica, while the test preparation of Comparative Example 1-1 exhibited irritating property because CNSL was not able to be completely adsorbed to the inside of silica.

### Example 2. Powdery composition for feed comprising pulverized product of cashew nut shell and oil sorbent

### (1) Test production of preparation

Cashew nut shells were obtained from Cashew Trading Co. , Ltd. , and used in the following tests.

The cashew nut shells and silica (trade name Sipernat 22, a commercial product manufactured by degussa) were pulverized uniformly using a pulverizer (Oster blender, a commercial product manufactured by AS ONE Corporation), thereby producing a powdery composition for a feed.

Table 3 shows the results.

### [Table 3]

**Table 3**

| | Pulverized product of cashew nut shell (g) | Silica (g) | Remark |
|---|---|---|---|
| Comparative Example 1-3 | 100 | 0 | Paste form |
| Comparative Example 1-4 | 100 | 10 | Wet powder, the product aggregates when it is grasped tightly, but the aggregate is easy to disintegrate |
| Experimental Example 1-4 | 100 | 15 | Dry powder |
| Experimental Example 1-5 | 100 | 30 | Dry powder |

### (2) Skin-irritating property

The skin-irritating properties were evaluated in the same way as in Example 1.

Table 4 shows the results.

### [Table 4]

**Table 4**

| | Pulverized product of cashew nut shell (g) | Silica (g) | Primary irritation index (24 hours later) | Primary irritation index (72 hours later) |
|---|---|---|---|---|
| Comparative Example 1-3 | 100 | 0 | Strong | Strong |
| Comparative Example 1-4 | 100 | 10 | Slight | Moderate |
| Experimental Example 1-4 | 100 | 15 | No irritation | No irritation |
| Experimental Example 1-5 | 100 | 30 | No irritation | No irritation |

Table 4 shows that the test preparations of Comparative Examples 1-3 and 1-4 exhibited slight to strong irritating properties . The test preparations of Experimental Examples 1-4 and 1-5 exhibited no irritating properties. The preparations in a dry powder state exhibited suppressed irritating properties because CNSL was adsorbed to the inside of silica, while the test preparations of Comparative Examples 1-3 and 1-4 exhibited irritating properties because CNSL was not adsorbed to the inside of silica.

Example 3. Antibacterial action of CNSL against *S. bovis* For examining the antibacterial action of CNSL against *S. bovis*, the following strains were each cultured in a brain-heart-infusion medium (manufactured by NISSUI PHARMACEUTICAL CO., LTD.) at 37°C for a day: *Staphylococcus aureus* strain isolated from a bovine; *S. bovis* DSM20065 strain; *Bacillus subtilis* NBRC3009 strain; *Escherichia coli* ATCC11303 strain; *Pseudomonas aeruginosa* NBRC12689 strain; and *Saccharomyces cerevisiae* NBRC10217 strain. Into a brain-heart-infusion medium to which CNSL was added, 10 µL each of culture media of the above-mentioned strains were inoculated, and the resultant medium was cultured at 37° C for two days, to thereby calculate a minimum growth-inhibitory concentration (MIC).

Table 5 shows the results.

### [Table 5]

**Table 5**

| | | MIC (µg/ml) |
|---|---|---|
| Gram-positive bacteria | *Staphylococcus aureus* isolated from a bovine | 6.25 |
| | *Streptococcus bovis* DSM20065 | 9.38 |
| | *Bacillus subtilis* NBRC3009 | 6.25 |
| Gram-negative bacteria | *Escherichia coli* ATCC11303 | >1600 |
| | *Pseudomonas aeruginosa* NBRC12689 | >1600 |
| Fungus | *Saccharomyces cerevisiae* NBRC10217 | >1600 |

CNSL has a high antibacterial action against *S. bovis* as well as against *Staphylococcus aureus* and *Bacillus subtilis,* which are Gram-positive bacteria. Therefore, the powder containing CNSL was found to have the effect of preventing a bloat.

### Example 4. Time-dependent effects of administration of powdery composition for feed

### (1) Sample

Four sheep fitted with rumen cannula were each provided with a feed (concentrated feed:hay=3:7 (volume)) in an amount equivalent to 1.4 mass% of the weight of each sheep.

A first sampling of rumen contents was performed before starting the administration of a test preparation Example 1-1. 0.4 (mass)% of the test preparation of Experimental Example 1-1 was added to the feed for the first two weeks and the sampling of rumen contents was performed once a week, i.e., twice. 1.0 (mass)% of the test preparation of Experimental Example 1-5 was added to the feed for the next two weeks and the sampling of rumen contents was performed once a week, i.e., twice. For the next two weeks, only a feed in which the test preparation was not added was provided to the sheep, and the sampling of rumen contents was performed once a week, i.e., twice.

### (2) Results

Table 6 shows the pH of rumen juice.

### [Table 6]

**Table 6**

| | Test preparations | pH |
|---|---|---|
| Before starting administration | - | 7.11 |
| First week | Experimental Example 1-1 | 7.08 |
| Second week | Experimental Example 1-1 | 7.10 |
| Third week | Experimental Example 1-5 | 7.05 |
| Fourth week | Experimental Example 1-5 | 7.09 |
| Fifth week | Discontinuation of administration | 6.76 |
| Sixth week | Discontinuation of administration | 6.81 |

The pH of the rumen juice did not lower during administration of the test preparations of Experimental Examples 1-1 and 1-5 but lowered when the administration of the test preparation of Experimental Example 1-5 was discontinued. Consequently, it is found that the test preparations of Experimental Examples 1-1 and 1-5 have an effect of preventing pH lowering of the rumen juice. That is, it is found that the test preparations of Experimental Examples 1-1 and 1-5 have an effect of preventing rumen acidosis which causes rumen juice to be oxidized and deteriorates the rumen function.

Table 7 shows the viscosity of the rumen juice (CP), the foamability of the rumen juice (IVI (%)), and the foam stability of the rumen juice (sIVI (%)).

### [Table 7]

**Table 7**

| | Test preparations | CP | IVI (%) | sIVI (%) |
|---|---|---|---|---|
| Before starting administration | - | 4.52 | 7.69 | 6.35 |
| First week | Experimental Example 1-1 | 2.69 | 2.16 | 2.11 |
| Second week | Experimental Example 1-1 | 2.39 | 1.81 | 1.63 |
| Third week | Experimental Example 1-5 | 2.45 | 1.79 | 1.41 |
| Fourth week | Experimental Example 1-5 | 2.34 | 1.76 | 1.31 |
| Fifth week | Discontinuation of administration | 4.12 | 3.69 | 2.99 |
| Sixth week | Discontinuation of administration | 3.69 | 6.69 | 4.69 |

Bovine bloat is such a disease that rumen juice is formed into a foamed state and the bovine becomes unable to expel gas by eructation, so the gas is accumulated in the rumen and causes abdominal bloating. When the symptom becomes severe, the gas compresses the heart and the lungs, leading to death. The viscosity, foamability, and foam stability of the rumen juice each lowered by the administration of the test preparations of Experimental Examples 1-1 and 1-5, and each increased when the administration was discontinued. That is, it is found that the test preparations of Experimental Examples 1-1 and 1-5 have an effect of preventing a bloat.

Table 8 shows the amount of the produced gas (ml/day/tube) when the collected rumen juice was sealed in a test tube and cultured at 37°C for 24 hours.

### [Table 8]

**Table 8**

| | Test preparations | Hydrogen | Methane | Carbon dioxide |
|---|---|---|---|---|
| Before starting administration | - | 0.04 | 0.81 | 3.41 |
| First week | Experimental Example 1-1 | 0.03 | 0.31 | 2.03 |
| Second week | Experimental Example 1-1 | 0.02 | 0.22 | 1.49 |
| Third week | Experimental Example 1-5 | 0.04 | 0.24 | 1.50 |
| Fourth week | Experimental Example 1-5 | 0.02 | 0.29 | 1.69 |
| Fifth week | Discontinuation of administration | 0.03 | 0.46 | 2.85 |
| Sixth week | Discontinuation of administration | 0.03 | 0.83 | 3.30 |

Methane decreased significantly by adding the test preparations of Experimental Examples 1-1 and 1-5. As the accumulation of hydrogen involved in the decrease in methane was not observed, it is considered that hydrogen produced in anaerobic fermentation was smoothly transferred to an alternative hydrogen consuming system.

Table 9 shows the concentration (mmol/dl) of total VFA, the molar ratio (%) of acetic acid, the molar ratio (%) of propionic acid, and the molar ratio (%) of butyric acid in the collected rumen juice.

### [Table 9]

**Table 9**

| | Test preparations | VFA concentration | Acetic acid % | Propionic acid % | Butyric acid % |
|---|---|---|---|---|---|
| Before starting administration | - | 3.32 | 60.5 | 20.9 | 15.7 |
| First week | Experimental Example 1-1 | 3.55 | 47.7 | 31.5 | 15.8 |
| Second week | Experimental Example 1-1 | 3.49 | 49.1 | 31.3 | 15.5 |
| Third week | Experimental Example 1-5 | 3.51 | 47.0 | 30.5 | 13.6 |
| Fourth week | Experimental Example 1-5 | 3.43 | 53.3 | 31.2 | 10.0 |
| Fifth week | Discontinuation of administration | 3.36 | 59.5 | 20.5 | 13.4 |
| Sixth week | Discontinuation of administration | 3.34 | 62.0 | 18.0 | 13.3 |

The concentration of total VFA did not change by adding the test preparations of Experimental Examples 1-1 and 1-5 (suppression of fermentation itself was not observed) . Further, with the addition of the test preparations of Experimental Examples 1-1 and 1-5, the fermentation pattern changed remarkably, acetic acid production significantly decreased, and propionic acid production significantly increased. That is, the rumen function-improving effect was observed.

Table 10 shows the ammonia concentration (mgN/dl) in the collected rumen juice.

### [Table 10]

**Table 10**

| | Test preparations | Ammonia concentration |
|---|---|---|
| Before starting administration | - | 22.80 |
| First week | Experimental Example 1-1 | 13.91 |
| Second week | Experimental Example 1-1 | 13.69 |
| Third week | Experimental Example 1-5 | 13.11 |
| Fourth week | Experimental Example 1-5 | 13.01 |
| Fifth week | Discontinuation of administration | 20.69 |
| Sixth week | Discontinuation of administration | 25.05 |

With the administration of the test preparations of Experimental Examples 1-1 and 1-5, the tendency of decrease in ammonia concentration was observed. The results show that proteolysis or deamination is suppressed and thus feed proteins are saved.

In an actual rumen, with the addition of the test preparations of Experimental Examples 1-1 and 1-5, carbon dioxide and methane decreased significantly. As the accumulation of hydrogen involved in the decrease in methane was not observed at that time, it is considered that hydrogen produced in anaerobic fermentation was smoothly transferred to an alternative hydrogen consuming system. Further, the concentration of total VFA did not change by adding the test preparations of Experimental Examples 1-1 and 1-5 (suppression of fermentation itself was not observed). However, the fermentation pattern changed remarkably, acetic acid production decreased significantly, and propionic acid production increased significantly. That is, the rumen function was improved.

The results are linked well with decrease in methane production, and it is considered that propionic acid production developed smoothly as an alternative consuming system of hydrogen. The facts described above were demonstrated in the actual rumen of the sheep, and hence, it is considered that the cashew nut shell liquid enhances the utilization efficiencies of energy and protein in livestock.

### Example 5. Granular (pellet-form) composition for feed comprising CNSL, oil sorbent, and hardened oil

### (1) Test production of preparation

Extremely hardened palm oil (trade name: PW-50, a commercial product manufactured by Yokozeki Oil & Fat Industries Co., Ltd., melting point 50°C) was melted in a water bath at 60°C and mixed uniformly with CNSL heated to 50°C, and then silica (trade name sipernat 22, a commercial product manufactured by degussa) was added thereto. The mixture was mixed well and granulated using a disc pelletter F-5 model (a commercial product manufactured by DALTON Corporation).

### [Table 11]

**Table 11**

| | CNSL (g) | Silica (g) | Hardened oil (g) | Property of pellet |
|---|---|---|---|---|
| Comparative Example 2-1 | 155 | 100 | 25 | Soft pellet |
| Experimental Example 2-1 | 130 | 100 | 50 | Hard pellet |
| Experimental Example 2-2 | 100 | 100 | 80 | Hard pellet |
| Experimental Example 2-3 | 80 | 100 | 100 | Hard pellet |
| Comparative Example 2-2 | 100 | 100 | 100 | Soft pellet |
| Comparative Example 2-3 | 150 | 100 | 50 | Soft pellet |
| Comparative Example 2-4 | 100 | - | - | - |

### [Table 12]

**Table 12**

| | CNSL (g) | Silica (g) | PVA (g) | Property of pellet |
|---|---|---|---|---|
| Comparative Example 2-5 | 200 | 200 | 200 | Hard pellet |

In the case where the hardened oil was contained at a ratio of 18 mass% or more, a sufficiently hard pellet was obtained when the mass ratio of CNSL+hardened oil and silica was 1:1.8. Although an insufficiently hard pellet is not suitable for practical use because the pellet disintegrates during transportation, the test preparations of Experimental Examples 2-1 to 2-3 were found to have a non-disintegratable dosage form.

To 200 g of CNSL was added 200 g of silica (trade name Sipernat 22, a commercial product manufactured by degussa), and the mixture was mixed well. Moreover, 200 g of PVA (trade name: Gohsenol NH26, a commercial product manufactured by Nippon Synthetic Chemical Industry Co. , Ltd.) was added thereto, and the mixture was granulated using a disc pelletter F-5 model (a commercial product manufactured by DALTON Corporation) . Drying was performed at 70° C for 40 minutes , to thereby obtain a sufficiently hard pellet, which was used as a test preparation of Comparative Example 2-5.

### (2) Skin-irritating property

Forty five 12-week-old female rabbits (Jla: JW) were acclimatized and fed, and animals which were evaluated to be normal and healthy were used in the following test.

The rabbits were fed individually in a breeding room adjusted to the room temperature of 22±4° C, humidity of 55±15%, and light and dark for 12 hours each (lighting time: 8 a.m. to 8 p.m.) using metal bracket cages, and the rabbits were allowed to freely ingest a feed CR-3 (manufactured by CLEA Japan, Inc.) and to drink water.

As shown in FIG. 1, the back of each rabbit was subjected to hair pretreatments including hair shearing and hair removing to provide four application sites. The horny layers in two sites of the application sites were peeled off to be abrasion sites. The test preparations were moisturized with official purified water and applied uniformly to lints (1×1 inch) so that the weight of a mixture of silica and CNSL contained in disintegrated pellet be 0.5 g, and the lints were attached to each of a non-abrasion site and a scratched site (two sites in total) in the back. To each of the other sites (two sites in total), 0.5 ml of official purified water was attached as a control in the same way as described above. The attachment time was 4 hours.

Four hours later, the lints were removed, and the test substances remaining on the patch sites were debrided with official purified water, and 1, 24, 48, and 72 hours later after the removal, the skin conditions were observed. In the case where disorders remained after 72 hours later, observation was continued up to the seventh day every 24 hours.

Judgment: skin reactions were evaluated based on the following criteria.

**Formation of erythema and crust**

| | |
|---|---|
| No erythema | 0 |
| Extremely slight erythema (barely detectable) | 1 |
| Obvious erythema | 2 |
| Moderate or severe erythema | 3 |
| From severe erythema (Beet redness) to formation of slight crust (deep damage) | 4 |

**Formation of edema**

| | |
|---|---|
| No edema | 0 |
| Extremely slight edema | 1 |
| Slight edema (clear verge formed by obvious protrusion can be detected) | 2 |
| Moderate edema (protrusion of about 1 mm) | 3 |
| Severe edema (protrusion of 1 mm and expansion beyond the exposure range) | 4 |
| Highest score | 4 |

Note that, the primary irritation index is calculated by dividing the sum of the scores of the non-abrasion and abrasion sites 24 and 72 hours later after the removal of the test substances by 4. In the case where the skin primary irritation index is 0, the sample is evaluated as "no irritation," in the case where the index is larger than 0 and less than 2, the sample is evaluated as "slight," in the case where the index is equal to or more than 2 and less than 5, the sample is evaluated as "moderate," and in the case where the index is equal to or more than 5, the sample is evaluated as "strong." In this test, six rabbits were used for each group, and Table 13 shows the results.

### [Table 13]

**Table 13**

| | CNSL (g) | Silica (g) | Hardened oil (g) | Primary irritation index (24 hours later) | Primary irritation index (72 hours later) |
|---|---|---|---|---|---|
| Comparative Example 2-1 | 155 | 100 | 25 | No irritation | Slight |
| Experimental Example 2-1 | 130 | 100 | 50 | No irritation | No irritation |
| Experimental Example 2-2 | 100 | 100 | 80 | No irritation | No irritation |
| Experimental Example 2-3 | 80 | 100 | 100 | No irritation | No irritation |
| Comparative Example 2-2 | 100 | 100 | 100 | No irritation | Slight |
| Comparative Example 2-3 | 150 | 100 | 50 | No irritation | Slight |
| Comparative Example 2-4 | 100 | - | - | Moderate | Strong |

### [Table 14]

**Table 14**

| | CNSL (g) | Silica (g) | PVA (g) | Primary irritation index (24 hours later) | Primary irritation index (72 hours later) |
|---|---|---|---|---|---|
| Comparative Example 2-5 | 200 | 200 | 200 | No irritation | No irritation |

The test preparation of Comparative Example 2-4 exhibited strong irritation because CNSL contacted directly with the skin, while the test preparations of Comparative Examples 2-2 and 2-3 exhibited slight irritation. On the other hand, the test preparations of Experimental Examples 2-1 to 2-3 exhibited no irritating properties. The hard pellets exhibited suppressed irritating properties because CNSL was adsorbed to silica inside the pellets, while the test preparations of Comparative Examples 2-2 and 2-3 exhibited irritating properties because CNSL was not able to be completely adsorbed to the inside of silica. Meanwhile, the test preparation of Comparative Example 2-5 exhibited suppressed irritating property.

Example 6. Granular (pellet-form) composition for feed comprising pulverized product of cashew nut shell, oil sorbent, and hardened oil

### (1) Test production of preparation

The cashew nut shells and silica (trade name Sipernat 22, a commercial product manufactured by degussa) were pulverized uniformly using a pulverizer (Oster blender, a commercial product manufactured by AS ONE Corporation) . To the pulverized product was added extremely hardened palm oil melted in advance, and the mixture was mixed well and granulated using a disc pelletter F-5 model (a commercial product manufactured by DALTON Corporation).

Table 15 shows the results.

### [Table 15]

**Table 15**

| | Pulverized product of cashew nut shell (g) | Silica (g) | Hardened oil (g) | Property of pellet |
|---|---|---|---|---|
| Comparative Example 2-6 | 100 | 0 | 0 | Paste form |
| Experimental Example 2-4 | 100 | 30 | 25 | Hard pellet |
| Experimental Example 2-5 | 80 | 30 | 30 | Hard pellet |
| Comparative Example 2-7 | 100 | 30 | 30 | Soft pellet |

In the case of the test preparations of Experimental Examples 2-4 and 2-5, sufficiently hard pellets were obtained. Although insufficiently hard pellets are not suitable for practical use because the pellets disintegrate during transportation, in the test preparations of Experimental Examples 2-4 and 2-5, a non-disintegratable dosage form was obtained.

### (2) Skin-irritating property

The skin-irritating properties were evaluated in the same way as in Example 1. Table 16 shows the results.

### [Table 16]

**Table 16**

| | Primary irritation index (24 hours later) | Primary irritation index (72 hours later) |
|---|---|---|
| Comparative Example 2-6 | Moderate | Strong |
| Experimental Example 2-4 | No irritation | No irritation |
| Experimental Example 2-5 | No irritation | No irritation |
| Comparative Example 2-7 | No irritation | Slight |

Table 16 shows that the test preparations of Comparative Examples 2-6 and 2-7 exhibited slight to strong irritating properties . The test preparations of Experimental Examples 2-4 and 2-5 exhibited no irritating properties. The hard pellets exhibited suppressed irritating property because CNSL was adsorbed to the inside of silica, while the test preparation of Comparative Example 2-6 exhibited irritating property because CNSL was not adsorbed.

### Example 7. Time-dependent effects of administration of pellet-form composition for feed

### (1) Sample

Four sheep fitted with rumen cannula were each provided with a feed (concentrated feed:hay=3:7 (volume)) in an amount equivalent to 1.4 mass% of the weight of each sheep.

A first sampling of rumen contents was performed before starting the administration of the test preparation of Comparative Example 2-5. 0.75 mass% of the test preparation of Comparative Example 2-5 was added to the feed for the first two weeks and the sampling of rumen contents was performed once a week, i.e., twice. 0.75 mass% of the test preparation of Comparative Example 2-2 was added to the feed for the next two weeks and the sampling of rumen contents was performed once a week, i.e., twice. For the next two weeks, only a feed in which the test preparation was not added was provided to the sheep, and the sampling of rumen contents was performed once a week, i.e., twice.

### (2) Results

Table 17 shows the pH of rumen juice.

### [Table 17]

**Table 17**

| | Test preparations | pH |
|---|---|---|
| Before starting administration | - | 7.11 |
| First week | Comparative Example 2-5 | 6.95 |
| Second week | Comparative Example 2-5 | 6.86 |
| Third week | Experimental Example 2-2 | 7.05 |
| Fourth week | Experimental Example 2-2 | 7.09 |
| Fifth week | Discontinuation of administration | 6.76 |
| Sixth week | Discontinuation of administration | 6.81 |

The pH of the rumen juice lowered during administration of the test preparation of Comparative Example 2-5 but recovered with the addition of the test preparation of Experimental Example 2-2. However, the pH of the rumen juice lowered when the administration of the test preparation of Experimental Example 2-2 was discontinued. It is found that the test preparation of Experimental Example 2-2 has an effect of preventing pH lowering of the rumen juice but the test preparation of Comparative Example 2-5 which was heat-treated in production has no effect of preventing pH lowering of the rumen juice. That is, it is found that the test preparation of Experimental Example 2-2 has an effect of preventing rumen acidosis which causes rumen juice to be acidified and deteriorates the rumen function.

Table 18 shows the viscosity of the rumen juice (CP), the foamability of the rumen juice (IVI (%)), and the foam stability of the rumen juice (sIVI (%)).

### [Table 18]

**Table 18**

| | Test preparations | CP | IVI (%) | sIVI (%) |
|---|---|---|---|---|
| Before starting administration | - | 4.52 | 7.69 | 6.35 |
| First week | Comparative Example 2-5 | 4.41 | 6.51 | 5.50 |
| Second week | Comparative Example 2-5 | 4.49 | 6.66 | 5.01 |
| Third week | Experimental Example 2-2 | 2.45 | 1.79 | 1.41 |
| Fourth week | Experimental Example 2-2 | 2.34 | 1.76 | 1.11 |
| Fifth week | Discontinuation of administration | 4.12 | 3.69 | 2.99 |
| Sixth week | Discontinuation of administration | 3.69 | 6.69 | 4.69 |

Bovine bloat is such a disease that rumen juice is formed into a foamed state and the bovine becomes unable to expel gas by eructation, so the gas is accumulated in the rumen and causes abdominal bloating. When the symptom becomes severe, the gas compresses the heart and the lungs, leading to death. The viscosity, foamability, and foam stability of the rumen juice lowered with the administration of the test preparation of Experimental Example 2-2, and increased when the administration was discontinued. That is, it is found that the test preparation of Experimental Example 2-2 has an effect of preventing a bloat. The test preparation of Comparative Example 2-5 which was heat-treated in production was found to have no effect of preventing a bloat.

Table 19 shows the amount of the produced gas (ml/day/tube) when the collected rumen juice was sealed in a test tube and cultured at 37°C for 24 hours.

### [Table 19]

**Table 19**

| | Test preparations | Hydrogen | Methane | Carbon dioxide |
|---|---|---|---|---|
| Before starting administration | - | 0.04 | 0.81 | 3.44 |
| First week | Comparative Example 2-5 | 0.03 | 0.78 | 3.43 |
| Second week | Comparative Example 2-5 | 0.02 | 0.80 | 3.39 |
| Third week | Experimental Example 2-2 | 0.04 | 0.29 | 1.50 |
| Fourth week | Experimental Example 2-2 | 0.02 | 0.22 | 1.69 |
| Fifth week | Discontinuation of administration | 0.03 | 0.46 | 2.85 |
| Sixth week | Discontinuation of administration | 0.03 | 0.83 | 3.30 |

Methane decreased significantly by adding the test preparation of Experimental Example 2-2. As the accumulation of hydrogen involved in the decrease in methane was not observed, it is considered that hydrogen produced in anaerobic fermentation was smoothly transferred to an alternative hydrogen consuming system. The test preparation of Comparative Example 2-5 which was heat-treated in production was found to have no effect of preventing methane production.

Table 20 shows the concentration (mmol/dl) of total VFA, the molar ratio (%) of acetic acid, the molar ratio (%) of propionic acid, and the molar ratio (%) of butyric acid in the collected rumen juice.

### [Table 20]

**Table 20**

| | Test preparations | VFA concentration | Acetic acid % | Propionic acid % | Butyric acid % |
|---|---|---|---|---|---|
| Before starting administration | - | 3.32 | 60.5 | 20.9 | 15.7 |
| First week | Comparative Example 2-5 | 3.55 | 57.7 | 20.5 | 15.8 |
| Second week | Comparative Example 2-5 | 3.49 | 59.1 | 21.4 | 15.5 |
| Third week | Experimental Example 2-2 | 3.23 | 47.0 | 30.5 | 13.6 |
| Fourth week | Experimental Example 2-2 | 3.31 | 53.3 | 31.2 | 10.0 |
| Fifth week | Discontinuation of administration | 3.69 | 59.5 | 20.5 | 13.4 |
| Sixth week | Discontinuation of administration | 4.07 | 62.0 | 18.0 | 13.3 |

The concentration of total VFA did not change by adding the test preparation of Experimental Example 2-2 (suppression of fermentation itself was not observed). Further, with the addition of the test preparation of Experimental Example 2-2, the fermentation pattern changed remarkably, acetic acid production significantly decreased, and propionic acid production significantly increased. That is, the rumen function-improving effect was observed. The test preparation of Comparative Example 2-5 which was heat-treated in production was found to have no rumen function-improving effect.

Table 21 shows the ammonia concentration (mgN/dl) in the collected rumen juice.

### [Table 21]

**Table 21**

| | Test preparations | Ammonia concentration |
|---|---|---|
| Before starting administration | - | 22.80 |
| First week | Comparative Example 2-5 | 22.91 |
| Second week | Comparative Example 2-5 | 21.69 |
| Third week | Experimental Example 2-2 | 13.11 |
| Fourth week | Experimental Example 2-2 | 13.01 |
| Fifth week | Discontinuation of administration | 20.69 |
| Sixth week | Discontinuation of administration | 25.05 |

With the administration of the test preparation of Experimental Example 2-2, the tendency of decrease in ammonia concentration was observed. The results show that proteolysis or deamination is suppressed and thus feed proteins are saved.

In an actual rumen, with the addition of the test preparation of Experimental Example 2-2, carbon dioxide and methane decreased significantly, and the accumulation of hydrogen involved in the decrease in methane was not observed at that time, and hence it is considered that hydrogen produced in anaerobic fermentation was smoothly transferred to an alternative hydrogen consuming system. Further, the concentration of total volatile fatty acids (VFA) did not change by adding the test preparation of Experimental Example 2-2 (suppression of fermentation itself was not observed) . However, the fermentation pattern changed remarkably, acetic acid production decreased significantly, and propionic acid production increased significantly. That is, the rumen function was improved. However, the test preparation of Comparative Example 2-5 which was heat-treated in production was found to have no rumen function-improving effect. Anacardic acid changes into cardanol when heated to 70°C or more, but cardanol is considered to have no rumen function-improving effect.

The results are linked well with decrease in methane production, and it is considered that propionic acid production developed smoothly as an alternative consuming system of hydrogen. The above-mentioned facts were demonstrated in the actual rumen of the sheep, and hence, it is considered that the cashew nut shell liquid enhances the utilization efficiencies of energy and protein in livestock.

### Industrial Applicability

Methane causes a loss of feed energy and is also a greenhouse gas, and therefore, it is an urgent issue to reduce methane production from bovines from the viewpoints of zootechnical science and environmentology. By allowing a ruminant to ingest cashew nut shell liquid when raising the ruminant, methane production can be suppressed. On the other hand, propionic acid has the highest transformation efficiency of feed hexose energy among volatile fatty acids and is a sugar-derived substance that is changed to glucose after absorption, and hence, promotion of propionic acid production leads to saving of other sugar-derived substances (e.g., amino acid) . Thus, the feed containing cashew nut shell liquid can enhance the utilization efficiencies of energy and protein in livestock. Further, when a ruminant is raised by being allowed to ingest cashew nut shell liquid, a bloat can be controlled.

When the composition for a feed of the present invention is processed into powder or granules, the handling property can be improved by solving the problem of difficulty in mixing in feeds, the problem caused by CNSL which is a greasy liquid and sticky. In addition, when a CNSL stock solution adheres to the skin, the solution is hardly removed, resulting in causing irritations. However, it is possible to prevent the oil from contacting the skin and to prevent the irritations by adsorbing the solution in silica.

## Claims

1. A particulate composition for a feed, comprising cashew nut shell liquid and/or anacardic acids and an oil sorbent, wherein the cashew nut shell liquid and/or anacardic acids is/are contained at a content of 25 mass% to 65 mass% relative to a total amount of the composition for a feed.

2. A particulate composition for a feed, comprising a pulverized product of cashew nut shells and an oil sorbent, wherein the pulverized product of cashew nut shells is contained at a content of 10 mass% to 90 mass% relative to a total amount of the composition for a feed.

3. The particulate composition for a feed according to claim 1 or 2, wherein the oil sorbent is at least one kind selected from a group consisting of magnesium oxide, stearate, talc, diatomite and silica.

4. The particulate composition for a feed according to claim 3, wherein the oil sorbent is an oil sorbent which adsorbs 50 to 300 g of oil per 100 g of the oil sorbent.

5. The particulate composition for a feed according to claim 4, wherein the oil sorbent is comprised of particles with a particle size of 2 to 200 µm.

6. The particulate composition for a feed according to any one of claims 1 to 5, further comprising a hardened oil.

7. The particulate composition for a feed according to any one of claims 1 to 6, wherein the mass ratio of the oil sorbent and cashew nut shell liquid is 100:20 to 100:180.

8. A feed comprising the composition for a feed according to any one of claims 1 to 7.

9. The feed according to claim 8, wherein the cashew nut shell liquid is contained at a content of 0.02 to 4.0 mass% relative to a total amount of the feed.

10. The feed according to claim 8 or 9, which is suitable for a ruminant.

11. Use of the feed according to any one of claims 8 to 10 for improving rumen fermentation and suppressing the generation of green house gas, wherein methods for treatment of the human or animal body by therapy are excluded.

12. Use of a composition according to any one of claims 1 to 7 for improving rumen fermentation and suppressing the generation of green house gas, wherein methods for treatment of the human or animal body by therapy are excluded.

13. The feed according to any one of claims 8 to 10 for use in controlling bloat.

14. A composition according to any one of claims 1 to 7 for use in controlling bloat.

15. Use of cashew nut shell liquid and/or anacardic acids for the manufacture of a feed according to any one of claims 8 to 10 for controlling bloat.

16. Use of cashew nut shell liquid and/or anacardic acids for the manufacture of a composition according to any one of claims 1 to 7 for controlling bloat.

## Patentansprüche

1. Eine teilchenförmige Zusammensetzung für ein Futtermittel, umfassend Cashewnussschalenflüssigkeit und/oder Anacardsäuren und ein Öl-Sorptionsmittel, wobei die Cashewnussschalenflüssigkeit und/oder die Anacardsäuren in einer Menge von 25 Massen-% bis 65 Massen-%, bezogen auf eine Gesamtmenge der Zusammensetzung für ein Futtermittel, enthalten ist/sind.

2. Eine teilchenförmige Zusammensetzung für ein Futtermittel, umfassend ein pulverisiertes Produkt aus Cashewnussschalen und einem Öl-Sorptionsmittel, wobei das pulverisierte Produkt aus Cashewnussschalen in einer Menge von 10 Massen-% bis 90 Massen-%, bezogen auf die Gesamtmenge der Zusammensetzung für ein Futtermittel, enthalten ist.

3. Eine teilchenförmige Zusammensetzung für ein Futtermittel nach Anspruch 1 oder 2, wobei das Öl-Sorptionsmittel mindestens eines, ausgewählt aus einer Gruppe bestehend aus Magnesiumoxid, Stearat, Talk, Diatomit und Siliciumdioxid, ist.

4. Die teilchenförmige Zusammensetzung für ein Futtermittel nach Anspruch 3, wobei das Öl-Sorptionsmittel ein Öl-Sorptionsmittel ist, das 50 bis 300 g Öl je 100 g des Öl-Sorptionsmittels adsorbiert.

5. Die teilchenförmige Zusammensetzung für ein Futtermittel nach Anspruch 4, wobei das Öl-Sorptionsmittel Teilchen mit einer Teilchengröße von 2 bis 200 µm umfasst.

6. Die teilchenförmige Zusammensetzung für ein Futtermittel nach einem der Ansprüche 1 bis 5, ferner umfassend ein gehärtetes Öl.

7. Die teilchenförmige Zusammensetzung für ein Futtermittel nach einem der Ansprüche 1 bis 6, wobei das Massenverhältnis des Öl-Sorptionsmittels und der Cashewnussschalenflüssigkeit 100:20 bis 100:180 beträgt.

8. Ein Futtermittel, umfassend die Zusammensetzung für ein Futtermittel nach einem der Ansprüche 1 bis 7.

9. Das Futtermittel nach Anspruch 8, wobei die Cashewnussschalenflüssigkeit in einer Menge von 0,02 bis 4,0 Massen-%, bezogen auf eine Gesamtmenge des Futtermittels, enthalten ist.

10. Das Futtermittel nach Anspruch 8 oder 9, welches für einen Wiederkäuer geeignet ist.

11. Verwendung des Futtermittels nach einem der Ansprüche 8 bis 10 zur Verbesserung der Pansenfermentation und zur Hemmung der Entstehung von Treibhausgas, wobei Verfahren zur therapeutischen Behandlung des menschlichen oder tierischen Körpers ausgeschlossen sind.

12. Verwendung einer Zusammensetzung nach einem der Ansprüche 1 bis 7 zur Verbesserung der Pansenfermentation und zur Hemmung der Entstehung von Treibhausgas, wobei Verfahren zur therapeutischen Behandlung des menschlichen und tierischen Körpers ausgeschlossen sind.

13. Das Futtermittel nach einem der Ansprüche 8 bis 10 zur Verwendung bei der Bekämpfung von Pansentympanie (engl. "bloat").

14. Eine Zusammensetzung nach einem der Ansprüche 1 bis 7 zur Verwendung bei der Bekämpfung von Pansentympanie (engl. "bloat").

15. Verwendung von Cashewnussschalenflüssigkeit und/oder Anarcadsäuren zur Herstellung eines Futtermittels nach einem der Ansprüche 8 bis 10 zur Bekämpfung von Pansentympanie (engl. "bloat").

16. Verwendung von Cashewnussschalenflüssigkeit und/oder Anarcadsäuren zur Herstellung einer Zusammensetzung nach einem der Ansprüche 1 bis 7 zur Bekämpfung von Pansentympanie (engl. "bloat").

## Revendications

1. Composition particulaire pour aliment, comprenant un liquide à base de coques de noix de cajou et/ou des acides anacardiques et un sorbant d'huile, dans laquelle le liquide à base de coques de noix de cajou et/ou les acides anacardiques est/sont contenu(s) à une teneur de 25 à 65 % en poids par rapport à une quantité totale de la composition pour aliment.

2. Composition particulaire pour aliment, comprenant un produit pulvérisé de coques de noix de cajou et un sorbant d'huile, dans laquelle le produit pulvérisé de coques de noix de cajou est contenu à une teneur de 10 à 90 % en poids par rapport à une quantité totale de la composition pour aliment.

3. Composition particulaire pour aliment selon la revendication 1 ou 2, dans laquelle le sorbant d'huile est d'au moins un type choisi dans le groupe constitué par l'oxyde de magnésium, un stéarate, le talc, la diatomite et la silice.

4. Composition particulaire pour aliment selon la revendication 3, dans laquelle le sorbant d'huile est un sorbant d'huile qui adsorbe de 50 à 300 g d'huile pour 100 g de sorbant d'huile.

5. Composition particulaire pour aliment selon la revendication 4, dans laquelle le sorbant d'huile comprend des particules ayant une taille de particules de 2 à 200 µm.

6. Composition particulaire pour aliment selon l'une quelconque des revendications 1 à 5, comprenant en outre une huile durcie.

7. Composition particulaire pour aliment selon l'une quelconque des revendications 1 à 6, dans laquelle le rapport en poids du sorbant d'huile au liquide à base de coques de noix de cajou est de 100:20 à 100:180.

8. Aliment comprenant la composition pour aliment selon l'une quelconque des revendications 1 à 7.

9. Aliment selon la revendication 8, dans lequel le liquide à base de coques de noix de cajou est contenu à une teneur de 0,02 à 4,0 % en poids par rapport à une quantité totale d'un aliment.

10. Aliment selon la revendication 8 ou 9, qui convient à un ruminant.

11. Utilisation de l'aliment selon l'une quelconque des revendications 8 à 10 pour améliorer la fermentation dans la panse et supprimer la génération des gaz à effet de serre, dans laquelle les méthodes de traitement du corps humain ou animal par thérapie sont exclues.

12. Utilisation d'une composition selon l'une quelconque des revendications 1 à 7 pour améliorer la fermentation dans la panse et supprimer la génération des gaz à effet de serre, dans laquelle les méthodes de traitement du corps humain ou animal par thérapie sont exclues.

13. Aliment selon l'une quelconque des revendications 8 à 10 pour son utilisation dans la régulation de la météorisation (anglais "bloat").

14. Composition selon l'une quelconque des revendications 1 à 7 pour son utilisation dans la régulation de la météorisation (anglais "bloat").

15. Utilisation du liquide à base de coques de noix de cajou et/ou d'acides anacardiques pour la fabrication d'un aliment selon l'une quelconque des revendications 8 à 10 pour réguler la météorisation (anglais "bloat").

16. Utilisation du liquide à base de coques de noix de cajou et/ou d'acides anacardiques pour la fabrication d'une composition selon l'une quelconque des revendications 1 à 7 pour réguler la météorisation (anglais "bloat").
